(19) Europäisches Patentamt
European Patent Office
Office européen des brevets

(11) EP 0 675 150 B1

(12) EUROPÄISCHE PATENTSCHRIFT

(45) Veröffentlichungstag und Bekanntmachung des Hinweises auf die Patenterteilung:
**13.11.1996 Patentblatt 1996/46**

(51) Int Cl.[6]: **C08G 77/38**

(21) Anmeldenummer: **95104712.5**

(22) Anmeldetag: **30.03.1995**

# (54) Verfahren zur Herstellung von Carboxylgruppen aufweisenden Organosiliciumverbindungen

Process for preparing carboxyl groups containing organosilicon compounds

Procédé de préparation de composés organosiliciques contenant des groupes carboxyliques

(84) Benannte Vertragsstaaten:
**DE ES FR GB IT**

(30) Priorität: **31.03.1994 DE 4411360**

(43) Veröffentlichungstag der Anmeldung:
**04.10.1995 Patentblatt 1995/40**

(73) Patentinhaber: **Wacker-Chemie GmbH**
**D-81737 München (DE)**

(72) Erfinder:
- **Bindl, Johann, Dr.**
  **D-84489 Burghausen (DE)**
- **Petersen, Herman, Dr.**
  **D-84489 Burghausen (DE)**
- **Bachhuber, Konrad, Dr.**
  **D-84547 Emmerting (DE)**
- **Ott, Monika**
  **D-84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 186 507**
**EP-A- 0 196 169**
**EP-A- 0 463 522**
**EP-A- 0 569 189**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 675 150 B1

## Beschreibung

Die Erfindung betrifft ein Verfahren zur Herstellung von Carboxylgruppen aufweisenden Organosiliciumverbindungen durch Abspaltung von Alkenen aus den entsprechenden esterfunktionellen Organosiliciumverbindungen.

Carboxylgruppen aufweisende Organopolysiloxane werden beispielsweise als Textilausrüstungsmittel eingesetzt. Bei den damit behandelten Textilien werden gute Weichgriffeffekte bei geringer Vergilbungsneigung erreicht. Ferner werden Carboxylgruppen aufweisende Organopolysiloxane beispielsweise zur Lederausrüstung und als Trennmittel eingesetzt.

Die EP-A 569 189 offenbart ein Verfahren zur Herstellung von Carboxylgruppen aufweisenden Organopolysiloxanverbindungen, bei dem ein Organohydrogenpolysiloxan mit einer ungesättigten Carboxylverbindung umgesetzt wird, wobei der aktive Wasserstoff der Carboxylgruppe durch eine Alkylgruppe ersetzt ist. Diese Verbindung wird anschließend zur Herstellung der Carboxylgruppen aufweisenden Organopolysiloxanverbindungen hydrolysiert.

Die Herstellung von Carboxylgruppen aufweisenden Organosiliciumverbindungen durch Umsetzung von $\alpha$-Olefinen, welche eine mit einer Silylschutzgruppe versehene Carboxylgruppe besitzen, mit Silanen oder Siloxanen, welche eine Si-H Gruppe besitzen und anschließender Hydrolyse der Silylschutzgruppen ist beschrieben in der EP-A-196 169. Jedoch ist dieses Verfahren sehr aufwendig, da die Hydrolyse des Silylesters aufgrund des heterogenen Systems große Wassermengen und lange Reaktionszeiten bei hohen Temperaturen erfordert. Das im Überschuß eingesetzte Wasser muß anschließend aus dem heterogenen System entfernt werden. Dies gelingt durch Abdestillieren nur mit Hilfe eines Schleppers, wie Toluol, da andernfalls die Mischung zu stark schäumt.

Der vorliegenden Erfindung liegt die Aufgabe zugrunde, ein einfach durchzuführendes Verfahren zur Herstellung von Carboxylgruppen aufweisenden Organosiliciumverbindungen bereitzustellen, das die Nachteile der bekannten Verfahren nicht aufweist.

Die Erfindung betrifft ein Verfahren zur Herstellung von Carboxylgruppen aufweisenden Organosiliciumverbindungen aus mindestens einer Einheit der allgemeinen Formel (I)

$$R^1_a Q_b SiO_{\frac{(4-a-b)}{2}}, \qquad (I)$$

wobei

- **R¹** Wasserstoffatome oder gleiche oder verschiedene, einwertige, gegebenenfalls mit Fluor-, Chlor- oder Bromatomen oder Cyanogruppen substituierte, gegebenenfalls durch Gruppen -O-, -S- oder zusätzliche Polyoxyalkylengruppen unterbrochene $C_1$- bis $C_{18}$-Kohlenwasserstoffreste, $C_1$-bis $C_{12}$-Alkoxy- oder Hydroxyreste,
- **Q** gleiche oder verschiedene, einwertige Gruppen der allgemeinen Formel (II)

$$-CR^2_2-CHR^2-R^3-COOH, \qquad (II)$$

wobei

- **R²** Wasserstoffatome oder gleiche oder verschiedene, einwertige, gegebenenfalls mit Fluor-, Chlor- oder Bromatomen substituierte $C_1$- bis $C_{10}$-Kohlenwasserstoffreste,
- **R³** einen zweiwertigen, gegebenenfalls mit Fluor-, Chlor- oder Bromatomen oder Cyanogruppen substituierten, gegebenenfalls durch Gruppen -O-, -S- oder zusätzliche Polyoxyalkylengruppen unterbrochenen $C_1$- bis $C_{18}$-Kohlenwasserstoffrest,
- **a** die Werte 0, 1, 2 oder 3 und
- **b** die Werte 0, 1, 2, 3 oder 4 bedeuten,

und die Summe aus **a** und **b** maximal 4 beträgt,
bei dem Organosiliciumverbindungen aus mindestens einer Einheit der allgemeinen Formel (III)

$$R^1_a A_b SiO_{\frac{(4-a-b)}{2}}, \qquad (III)$$

wobei

**A** gleiche oder verschiedene, einwertige Gruppen der allgemeinen Formel (IV)

$$-CR^2{}_2-CHR^2-R^3-COOCR^4{}_2-CHR^5{}_2 \qquad (IV)$$

bedeutet und **R⁴** und **R⁵** die Bedeutungen von **R¹** aufweisen,
in Gegenwart von Brönstedt- oder Lewissäure erwärmt werden, wobei Alkene der nachstehenden allgemeinen Formel (V) abgespalten werden.

Aus Organosiliciumverbindungen der allgemeinen Formel (III) können durch Erhitzen Alkene der allgemeinen Formel (V)

$$CR^4{}_2=CR^5{}_2 \qquad (V)$$

auch ohne Säurekatalyse abgespalten werden. Jedoch verläuft diese Abspaltung dann erst bei Temperaturen oberhalb von 280°C mit brauchbarer Geschwindigkeit. Bei diesen Temperaturen finden jedoch Folgereaktionen der Organosiliciumverbindungen aus mindestens einer Einheit der allgemeinen Formel (I) an den Carboxylgruppen statt, wobei Gelierung durch Quervernetzung auftreten kann.

Die vorliegende Erfindung beruht auf der Entdeckung, daß die Abspaltung von Alkenen der allgemeinen Formel (V) in Gegenwart von Brönstedt- oder Lewissäuren bei erheblich geringerer Temperatur verläuft und somit die Organosiliciumverbindungen aus mindestens einer Einheit der allgemeinen Formel (I) in schonender Weise ohne die Gefahr der Gelierung durch Vernetzung hergestellt werden können. Man erhält darüberhinaus reinere Produkte in höheren Ausbeuten.

Bei den Organosiliciumverbindungen hat in mindestens einer Einheit der vorstehenden allgemeinen Formeln (I) und (III) **b** den Wert 1, 2, 3 oder 4.

Beispiele für $C_1$- bis $C_{18}$-Kohlenwasserstoffreste **$R^1$** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Die vorstehenden Kohlenwasserstoffreste **$R^1$** enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste **$R^1$** mit aliphatischer Doppelbindung sind der Vinyl-, Allyl-, und 5-Hexen-1-ylrest.

Vorzugsweise enthalten jedoch höchstens 1 % der Kohlenwasserstoffreste **$R^1$** eine Doppelbindung.

Beispiele für mit Fluor-, Chlor- oder Bromatomen substituierte $C_1$- bis C18-Kohlenwasserstoffreste sind der 3,3,3-Trifluor-n-propylrest, der 2,2,2,2',2',2'-Hexafluorisopropylrest, der Heptafluorisopropylrest, und der o-, m-, und p-Chlorphenylrest.

Die Alkoxyreste sind über ein Sauerstoffatom gebundene, vorstehend beschriebene Alkylreste. Die Beispiele für Alkylreste gelten auch für die Alkoxyreste **$R^1$**.

Beispiele für die durch Polyoxyalkylengruppen unterbrochenen Reste **$R^1$** sind die Reste der allgemeinen Formel (VI)

$$-R^6-[O(CHR^7)_c]_dOR^7, \qquad (VI)$$

in der

**$R^6$** einen zweiwertigen $C_1$- bis $C_6$-Alkylenrest,
**$R^7$** Wasserstoffatome oder gleiche oder verschiedene, einwertige $C_1$- bis C6-Kohlenwasserstoffreste,
**c** die Werte 0, 1, 2, 3, 4 oder 5 und
**d** ganzzahlige Werte von 1 bis 100 bedeuten.

Beispiele für die einwertigen Reste **$R^2$**, **$R^4$** und **$R^5$** sind bei den vorstehenden Beispielen für **$R^1$** aufgeführt.

Beispiele für die zweiwertigen $C_1$- bis $C_{18}$-Kohlenwasserstoffreste **$R^3$** sind gesättigte gerad- oder verzweigtkettige

oder cyclische Alkylenreste wie der Methylen- und Ethylenrest sowie Propylen-, Butylen-, Pentylen-, Hexylen-, 2-Methylpropylen-, Cyclohexylen-, Octylen-, Decylen-, Dodecylen- und Octadecylenreste oder ungesättigte Alkylen- oder Arylen-reste wie der Hexenylenrest und Phenylenreste.
Beispiele für die durch Polyoxyalkylengruppen unterbrochenen Reste **R³** sind die durch Einheiten $-[O(CHR^7)_c]_d-$ unterbrochenen vorstehenden Beispiele für die zweiwertigen $C_1$- bis $C_{18}$-Kohlenwasserstoffreste, wobei **R⁷**, c und d die vorstehenden Bedeutungen aufweisen.

Wenn die Summe aus **a** und **b** 4 beträgt, handelt es sich bei den Organosiliciumverbindungen der allgemeinen Formeln (I) und (III) um Silane, wenn die Summe niedriger als 4 ist, um Siloxane.

In den vorstehenden allgemeinen Formeln (I) bis (VI) bedeuten vorzugsweise, jeweils unabhängig voneinander

| | |
|---|---|
| **$R^1$** | Methyl-, Phenyl-, $C_1$- bis $C_3$-Alkoxy- oder Hydroxyreste, |
| **$R^2$** | Wasserstoffatome oder Methylreste, |
| **$R^3$** | zweiwertige $C_2$- bis C18-Kohlenwasserstoffreste, oder durch zusätzliche Einheiten $-[O(CHR^7)_c]_d-$ unterbrochene zweiwertige $C_1$- bis C18-Kohlenwasserstoffreste, wobei **$R^7$** ein Wasserstoffatom, c die Werte 1, 2, 3 oder 4 und d ganzzahlige Werte von 1 bis 100, insbesondere von 1 bis 50 bedeuten, |
| **$R^4$** und **$R^5$** | Wasserstoffatome oder einwertige $C_1$- bis $C_5$-Alkylreste, |
| **$R^6$** | zweiwertige $C_2$- bis $C_4$-Alkylenreste, |
| **$R^7$** | Wasserstoffatome oder gleiche oder verschiedene, einwertige $C_1$- bis $C_4$-Alkylreste, |
| **a** | die Werte 1, 2 oder 3, |
| **b** | die Werte 0, 1 oder 2, |
| **c** | die Werte 1, 2, 3 oder 4 und |
| **d** | die Werte 1 bis 50. |

Vorzugsweise werden als Alkene der allgemeinen Formel (V) solche Alkene abgespalten, deren Siedepunkt bei 0,1 MPa höchstens 120°C, insbesondere 50°C betragen, da diese Alkene leicht abgetrennt werden können. Gegebenenfalls wird bei der Abtrennung der Alkene, die vorzugsweise gleichzeitig mit der Abspaltung der Alkene erfolgt, bei vermindertem Druck gearbeitet. Besonders bevorzugte Alkene sind solche mit einem bis mehreren Alkylsubstituenten, z.B. 1-Propen, 2-Buten, 2-Methyl-2-buten, 2,3-Dimethyl-2-buten und insbesondere Isobuten.

Das Verfahren zur Herstellung von Carboxylgruppen aufweisenden Organosiliciumverbindungen eignet sich besonders gut zur Herstellung von ölen, bei denen das Verhältnis von Einheiten der allgemeinen Formel (I), in der **a** den Wert 2 hat und **b** den Wert 0 hat, zu Einheiten der allgemeinen Formel (I), in der a den Wert 1 oder 2 hat und **b** den Wert 1 hat, 1 : 1 bis 500 : 1, vorzugsweise 5 : 1 bis 200 : 1 beträgt. Vorzugsweise beträgt bei diesen ölen das Verhältnis von Einheiten der allgemeinen Formel (I), in der die Summe aus **a** und b einen Wert hat, der nicht 2 beträgt, zu Einheiten der allgemeinen Formel (I), in der die Summe aus a und b den Wert 2 beträgt, 1 : 1 bis 1 : 1000, insbesondere 1 : 5 bis 1 : 300.

Die Carboxylgruppen aufweisenden Organosiliciumverbindungen haben vorzugsweise eine durchschnittliche Viskosität von 10 bis 100000 $mm^2/s$, insbesondere 50 bis 10000 $mm^2/s$ bei 25°C.

Beispiele für Brönstedt- oder Lewissäuren, die im Verfahren eingesetzt werden können, sind Mineral-, Carbon-, Sulfonsäuren sowie Metallverbindungen, Metallsalze und Metallkomplexsalze, die als Lewis-Säure fungieren.

Die Reaktion kann auch in einer Suspension oder Emulsion eines oder mehrerer Reaktionspartner durchgeführt werden, wobei auch die Säure selbst als Lösungsmittel dienen kann.

Nach der Umsetzung kann die Säure aus dem Produkt gegebenenfalls unter vermindertem Druck abgezogen, oder mit schwachen Basen, wie Hydrogencarbonaten, Acetaten und Formiaten, die kaum mit den Carboxylgruppen des Produktes reagieren, neutralisiert werden. Die Neutralisationsprodukte sind im Normalfall im Produkt unlöslich und können als Feststoffe auf einfache Weise durch Filtration entfernt werden.

Die Organosiliciumverbindungen aus mindestens einer Einheit der allgemeinen Formel (III) können vorzugsweise hergestellt werden, indem Verbindungen der allgemeinen Formel (VIII)

$$R^1_aH_bSiO_{\frac{(4-a-b)}{2}}, \qquad (VIII)$$

mit Verbindungen der allgemeinen Formel (IX)

$$CR^2_2=CR^2-R^3-COOCR^4_2-CHR^5_2 \qquad (IX)$$

wobei

**$R^1$, $R^2$, $R^3$, $R^4$, $R^5$, a** und **b** die vorstehenden Bedeutungen aufweisen,
in Gegenwart eines Hydrosilylierungskatalysators umgesetzt werden.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 20° C .

Beispiele

**Beispiel 1:** DSC-Untersuchung der Katalyseaktivität verschiedener Säuren für die t-Butylesterspaltung.
Eine Menge von ca. 40 mg des organomodifizierten Siliconöls folgender Struktur:

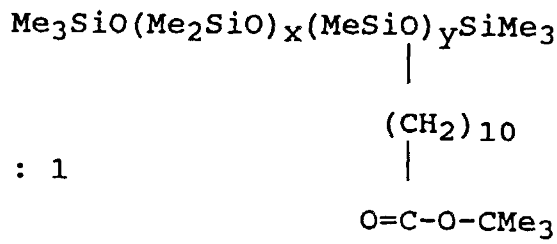

x : y = 50 : 1

wurde zusammen mit einer katalytischen Menge an Säure in druckfeste Glasampullen eingeschmolzen und einer DSC-Messung unterzogen. Die Aufheizrate betrug 10°C/min und es wurde von 20°C bis 400°C vermessen. Die Abspaltung der t-Butylgruppe als Isobuten ist in Form eines endothermen Peaks erkennbar und die Ergebnisse sind im einzelnen in folgender Tabelle dargestellt:

| Säuretyp | Säurenkonzentration (Gew%) | Peaktemperatur (°C) |
|---|---|---|
| ohne Säure | - | 295 |
| Schwefelsäure | 0,1<br>1,0 | 195<br>138 |
| Perchlorsäure | 0,16<br>1,1 | 145<br>85 |
| Trifluormethansulfonsäure | 0,1<br>0,01 | 103<br>95 |

Trifluormethansulfonsäure zeigt demzufolge die höchste katalytische Aktivität und senkt die Abspaltungstemperatur bereits bei einer Konzentration von 100 ppm von 295°C auf ca. 100°C ab.

**Beispiel 2:** Darstellung des kammförmigen carboxyfunktionellen Siliconöls von Beispiel 1

69 g (0,27 mol) 10-Undecensäure-t-butylester wurden zusammen mit 156 g (0,037 mol SiH) eines Polydimethylsiloxans mit kammförmigen Hydrogengruppen vorgelegt und unter Stickstoffinertisierung auf 80°C aufgeheizt. Bei dieser Temperatur wurden 1,95 ml eines Pt-Katalysators in Toluol (0,5% Pt, polymergebunden) zugegeben und auf 100°C aufgeheizt. Anschließend wurden im Verlauf von 1 Stunde weitere 624 g (0,150 mol SiH) des genannten Polydimethylsiloxans mit kammförmigen Hydrogengruppen zudosiert. Nach einer weiteren Stunde bei 100°C wurden erneut 0,98 ml des oben genannten Pt-Katalysators zugegeben und 1 Stunde bei 100°C gerührt. Das erhaltene Produkt wurde nicht isoliert, sondern es erfolgte direkt die säurekatalysierte Abspaltung der t-Butylgruppe. Hierzu wurden bei einer Temperatur von 80°C 0,05 ml Trifluormethansulfonsäure zugegeben und man rührte anschließend 2 Stunden bei 120°C. Nach Neutralisation des Katalysators mit 0,85 g Natriumhydrogencarbonat bei 80°C wurden flüchtige Bestandteile bei 120°C und einem Vakuum von 5 mbar entfernt. Anschließend wurde abgekühlt und filtriert und man erhielt

ein fast farbloses, klares Öl mit folgenden Kenndaten:

Viskosität (25°C) : 500 $mm^2/s$
Säuregehalt: 20 mg KOH/g

Struktur (laut $^1H$-NMR-Analyse):

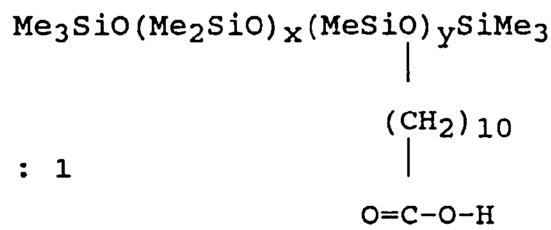

x : y = 50 : 1

**Beispiel 3:** Darstellung eines α,ω-carboxyfunktionellen Siliconöls

126 g (0,53 mol) 10-Undecensäure-t-butylester wurden zusammen mit 300 g (0,075 mol SiH) eines α,ω-Hydrogen-Polydimethylsiloxans vorgelegt, mit Stickstoff inertisiert und auf 80°C aufgeheizt. Dann wurden 3,71 ml eines Pt-Katalysators in Toluol (0,5% Pt, polymergebunden) zugegeben und man heizte weiter auf 100°C. Nun wurden im Verlauf von 1 Stunde weitere 1200 g (0,30 mol SiH) des genannten α,ω-Hydrogen-Polydimethylsiloxans zudosiert und nach Dosierende noch 1 Stunde gerührt. Anschließend wurden nochmals 1,86 ml des genannten Pt-Katalysators zugegeben und 1 Stunde bei 100°C gerührt. Zur Abspaltung der t-Butylgruppe wurden dann bei 80°C 0,095 ml Trifluormethansulfonsäure zugegeben. Man rührte 2 Stunden bei 120°C, neutralisierte mit 1,6 g Natriumhydrogencarbonat (1 h/80°C), entfernte flüchtige Bestandteile bei 120°C/5 mbar, kühlte ab und filtrierte. Es wurde ein fast farbloses, klares Öl mit folgenden Kenndaten erhalten:

Viskosität: 370 $mm^2/s$
Säuregehalt: 19,6 mg KOH/g

Struktur (laut $^1H$-NMR-Analyse) :
$HO_2C(CH_2)_{10}SiMe_2O(Me_2SiO)_{100}SiMe_2(CH_2)_{10}CO_2H$

## Patentansprüche

1. Verfahren zur Herstellung von Carboxylgruppen aufweisenden Organosiliciumverbindungen aus mindestens einer Einheit der allgemeinen Formel (I)

$$R^1{}_aQ_bSiO_{\frac{(4-a-b)}{2}}, \qquad (I)$$

wobei

**R¹** Wasserstoffatome oder gleiche oder verschiedene, einwertige, gegebenenfalls mit Fluor-, Chlor- oder Bromatomen oder Cyanogruppen substituierte, gegebenenfalls durch Gruppen -O-, -S- oder zusätzliche Polyoxyalkylengruppen unterbrochene $C_1$- bis $C_{18}$-Kohlenwasserstoffreste, $C_1$- bis $C_{12}$-Alkoxy- oder Hydroxyreste,

**Q** gleiche oder verschiedene, einwertige Gruppen der allgemeinen Formel (II)

$$-CR^2{}_2-CHR^2-R^3-COOH, \qquad (II)$$

wobei

**$R^2$** Wasserstoffatome oder gleiche oder verschiedene, einwertige, gegebenenfalls mit Fluor-, Chlor- oder Bromatomen substituierte $C_1$- bis $C_{10}$-Kohlenwasserstoffreste,

**$R^3$** einen zweiwertigen, gegebenenfalls mit Fluor-, Chlor- oder Bromatomen oder Cyanogruppen substituierten, gegebenenfalls durch Gruppen -O-, -S- oder zusätzliche Polyoxyalkylengruppen unterbrochenen $C_1$-bis $C_{18}$-Kohlenwasserstoffrest,

**a** die Werte 0, 1, 2 oder 3 und

**b** die Werte 0, 1, 2, 3 oder 4 bedeuten,

und die Summe aus **a** und **b** maximal 4 beträgt,

bei dem Organosiliciumverbindungen aus mindestens einer Einheit der allgemeinen Formel (III)

$$R^1_a A_b SiO_{\frac{(4-a-b)}{2}} , \qquad (III)$$

wobei

**A** gleiche oder verschiedene, einwertige Gruppen der allgemeinen Formel (IV)

$$-CR^2{}_2\text{-}CHR^2\text{-}R^3\text{-}COOCR^4{}_2\text{-}CHR^5{}_2 \qquad (IV)$$

bedeutet und

**$R^4$ und $R^5$** die Bedeutungen von **$R^1$** aufweisen,

in Gegenwart von Brönstedt- oder Lewissäure erwärmt werden, wobei Alkene der allgemeinen Formel (V)

$$CR^4_2{=}CR^5_2 \qquad (V)$$

abgespalten werden.

2. Verfahren nach Anspruch 1, wobei **$R^4$** und **$R^5$** Wasserstoffatome oder einwertige $C_1$- bis $C_5$-Alkylreste bedeuten.

3. Verfahren nach Anspruch 1 oder 2, wobei **$R^3$** zweiwertige $C_2$- bis $C_{18}$-Kohlenwasserstoffreste, oder durch Einheiten $-[O(CHR^7)_c]_d-$ unterbrochene zweiwertige $C_1$- bis $C_{18}$-Kohlenwasserstoffreste bedeutet, wobei **$R^7$** ein Wasserstoffatom, **c** die Werte 1, 2, 3 oder 4 und **d** ganzzahlige Werte von 1 bis 50 bedeuten.

4. Verfahren nach einem der Ansprüche 1 bis 3, wobei **$R^2$** Wasserstoffatome oder Methylreste, bedeutet.

5. Verfahren nach einem der Ansprüche 1 bis 4, wobei die Säure ausgewählt wird aus Schwefel-, Salz-, Trifluoressig-, Tetrafluorobor-, Methansulfon-, Perchlor- und Trifluormethansulfonsäure.

## Claims

1. Process for the preparation of organosilicon compounds containing carboxyl groups and comprising at least one unit of the general formula (I)

$$R^1_a Q_b SiO_{\frac{(4-a-b)}{2}} , \qquad (I)$$

wherein

the substituents $R^1$ are hydrogen atoms or identical or different monovalent $C_1$- to $C_{18}$-hydrocarbon radicals which are optionally substituted by fluorine, chlorine or bromine atoms or cyano groups and are optionally interrupted by the groups -O- or -S- or additional polyoxyalkylene groups, $C_1$- to $C_{12}$-alkoxy radicals or hydroxyl radicals,

the substituents Q are identical or different monovalent groups of the general formula (II)

$$-CR^2{}_2-CHR^2-R^3-COOH \qquad (II)$$

wherein
the substituents $R^2$ are hydrogen atoms or identical or different monovalent $C_1$- to $C_{10}$-hydrocarbon radicals which are optionally substituted by fluorine, chlorine or bromine atoms,
the substituent $R^3$ is a divalent $C_1$- to $C_{18}$-hydrocarbon radical which is optionally substituted by fluorine, chlorine or bromine atoms or cyano groups and optionally interrupted by the groups -O- or -S- or additional polyoxyalkylene groups,
a has the values 0, 1, 2 or 3 and
b has the values 0, 1, 2, 3 or 4,

and the sum of a and b is not more than 4,
in which process organosilicon compounds comprising at least one unit of the general formula (III)

$$R^1{}_aA_bSiO_{\frac{(4-a-b)}{2}}, \qquad (III)$$

wherein

the substituents A are identical or different monovalent groups of the general formula (IV)

$$-CR^2{}_2-CHR^2-R^3-COOCR^4{}_2-CHR^5{}_2 \qquad (IV)$$

and
$R^4$ and $R^5$ have the meanings of $R^1$,
are heated in the presence of a Brönstedt or Lewis acid, alkenes of the general formula (V)

$$CR^4_2=CR^5_2 \qquad (V)$$

being split off.

2. Process according to Claim 1, wherein $R^4$ and $R^5$ are hydrogen atoms or monovalent $C_1$- to $C_5$-alkyl radicals.

3. Process according to Claim 1 or 2, wherein the substituents $R^3$ are divalent $C_2$- to $C_{18}$-hydrocarbon radicals, or divalent $C_1$- to $C_{18}$-hydrocarbon radicals which are interrupted by units $-[O(CHR^7)_c]_d-$, in which $R^7$ is a hydrogen atom, c has the values 1, 2, 3 or 4 and d has integral values from 1 to 50.

4. Process according to one of Claims 1 to 3, wherein the substituents $R^2$ are hydrogen atoms or methyl radicals.

5. Process according to one of Claims 1 to 4, wherein the acid is chosen from sulfuric, hydrochloric, trifluoroacetic, tetrafluoroboric, methanesulfonic, perchloric and trifluoromethanesulfonic acid.

## Revendications

1. Procédé de préparation de composés organosiliciés contenant des groupes carboxyliques, constitués d'au moins un motif de formule générale (I)

$$R^1{}_aQ_bSiO_{(4-a-b)/2}, \qquad (I)$$

dans laquelle

$R^1$ représente des atomes d'hydrogène ou des radicaux hydrocarbure en $C_1$-$C_{18}$ monovalents identiques ou différents, éventuellement substitués par des atomes de fluor, de chlore ou de brome ou des groupes cyano, éventuellement interrompus par des groupes -O-, -S- ou des groupes polyoxyalkylène supplémentaires, des radicaux alkoxy en $C_1$-$C_{12}$ ou hydroxyle,
Q représente des groupes monovalents identiques ou différents de formule générale (II)

$$-CR^2{}_2-CHR^2-R^3-COOH, \quad (II)$$

dans laquelle

$R^2$ représente des atomes d'hydrogène ou des radicaux hydrocarbure en $C_1$-$C_{10}$ monovalents identiques ou différents, éventuellement substitués par des atomes de fluor, de chlore ou de brome,
$R^3$ représente un radical hydrocarbure en $C_1$-$C_{18}$ bivalent, éventuellement substitué par des atomes de fluor, de chlore ou de brome ou des groupes cyano, éventuellement interrompu par des groupes -O-, -S- ou des groupes polyoxyalkylène supplémentaires,
a a la valeur 0, 1, 2 ou 3 et
b a la valeur 0, 1, 2, 3, ou 4

et la somme de a et b s'élève au maximum à 4,
dans lequel des composés organosiliciés constitués d'au moins un motif de formule générale (III)

$$R^1{}_aA_bSiO_{(4-a-b)/2}, \quad (III)$$

dans laquelle

A représente des groupes monovalents identiques ou différents de formule générale (IV)

$$-CR^2{}_2-CHR^2-R^3-COOCR^4{}_2-CHR^5{}_2 \quad (IV)$$

et
$R^4$ et $R^5$ ont les significations de $R^1$,
sont chauffés en présence d'un acide de Brönstedt ou de Lewis, des alcènes de formule générale (V)

$$CR^4{}_2=CR^5{}_2 \quad (V)$$

étant éliminés.

**2.** Procédé selon la revendication 1, dans lequel $R^4$ et $R^5$ représentent des atomes d'hydrogène ou des radicaux alkyle en $C_1$-$C_5$ monovalents.

**3.** Procédé selon la revendication 1 ou 2, dans lequel $R^3$ représente des radicaux hydrocarbure en $C_2$-$C_{18}$ bivalents, ou des radicaux hydrocarbure en $C_1$-$C_{18}$ bivalents interrompus par des motifs $-[OCHR^7)_c]_d-$, dans lesquels $R^7$ représente un atome d'hydrogène, c a la valeur 1, 2, 3 ou 4 et d est un entier de 1 à 50.

**4.** Procédé selon l'une quelconque des revendications 1 à 3, dans lequel $R^2$ représente des atomes d'hydrogène ou des radicaux méthyle.

**5.** Procédé selon l'une quelconque des revendications 1 à 4, dans lequel l'acide est choisi parmi l'acide sulfurique, chlorhydrique, trifluoroacétique, tétrafluoroborique, méthanesulfonique, perchlorique et trifluorométhanesulfonique.